# EUROPEAN PATENT APPLICATION

(11) **EP 2 862 739 A1**
(43) Date of publication of application: **22.04.2015**
(21) Application number: 13841218.4
(22) Date of filing: 18.09.2013
(51) Int. Cl.: B60J 10/04

(54) **GLASS RUN FOR VEHICLE**

(30) Priority: 25.09.2012 JP 2012210986
(71) Applicant: Toyoda Gosei Co., Ltd., Kiyosu-shi Aichi 452-8564 (JP)
(72) Inventor: KAKAMI Toshifumi, Kiyosu-shi Aichi 452-8564 (JP); KUZUYA Hiroshi, Kiyosu-shi Aichi 452-8564 (JP); MIURA Yoshihiro, Kiyosu-shi Aichi 452-8564 (JP)
(74) Representative: Kramer Barske Schmidtchen Patentanwälte PartG mbB
(86) International application number: PCT/JP2013/075091
(87) International publication number: WO 2014/050642

(57) **Abstract**

{Problem} To provide a glass run in which no gaps occur between a cover lip and a door panel, even with the raising and lowering of a door window.

{Solution} In a glass run for a vehicle, a glass run upper side part 13 is formed by a bottom wall 40, an exterior side wall 20, an interior side wall 30, an exterior seal lip 21, an interior seal lip 31, an exterior cover lip 23 and an interior cover lip 33. A door outer panel flange 2f of a door frame 2 is retained by an exterior retention groove 27 formed between the exterior side wall 20 and the exterior cover lip 23. A door inner panel flange 2j of the door frame 2 is retained by an interior retention groove 37 formed between the interior side wall 30 and the interior cover lip 33. An engaging protrusion 35 which engages with the tip of the flange is formed in the bottom of at least one of the exterior retention groove 27 and the interior retention groove 37.

## Description

### {Technical Field}

The present invention relates to a glass run for a vehicle, which is attached to an upper side of a door frame to guide a door glass as it is raised and lowered.

### {Background Art}

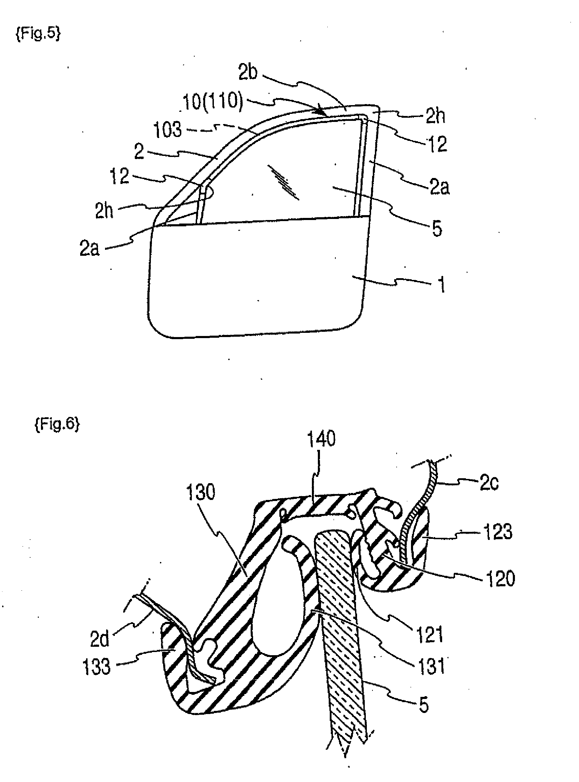

As shown in Fig. 5, a glass run 110 is attached to an inner periphery of a door frame 2 of a door 1 of a vehicle for guiding a door glass 5 as it is raised and lowered.

As shown in Fig. 5, conventionally, the glass run 110 is fitted within a channel 103 of the door frame 2 to guide the door glass 5 upwardly and downwardly, and provide a seal between the door glass 5 and the door frame 2.

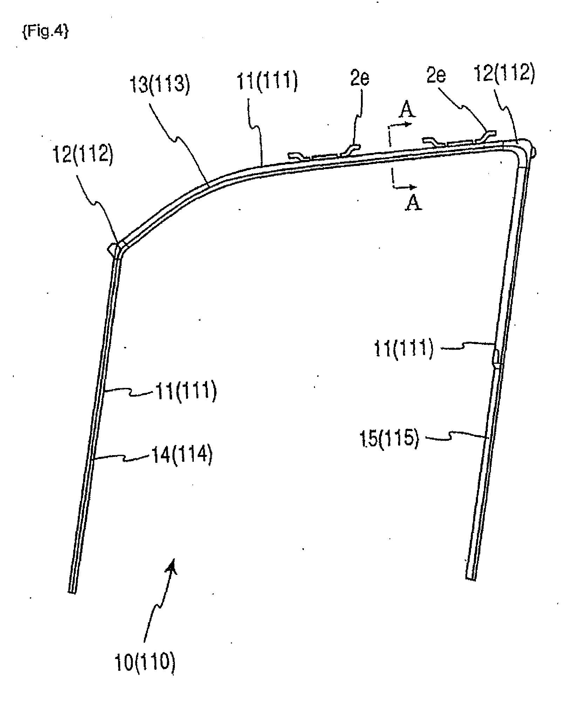

As shown in Fig. 4, the glass run 110 includes straight sections 111 formed by extrusion, and corner sections 112 formed by molding in conformity with corners 2h of the door frame 2.

The straight sections 111 include a glass run upper side part 113 for attachment to an upper side 2b of the door frame 2, a glass run front vertical side part 114 for attachment to a front vertical side 2a of the door frame 2, and a glass run rear vertical side part 115 for attachment to a rear vertical side 2a of the door frame 2.

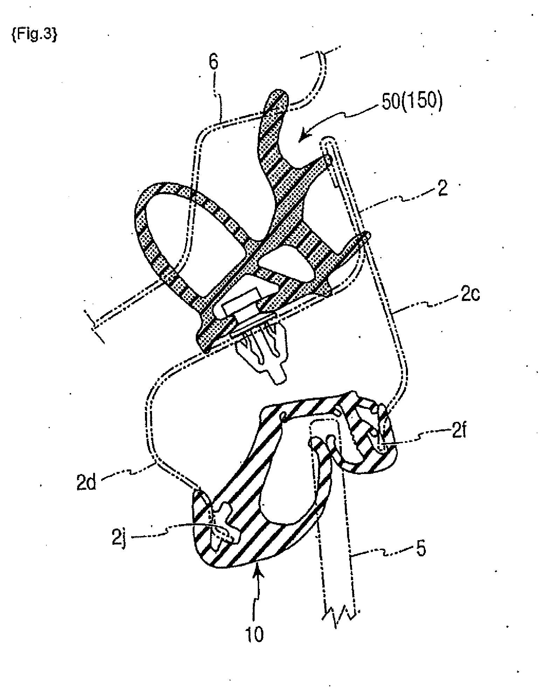

As shown in Fig. 3, the door 1 is sealed against a vehicle body with a door weather strip 150 attached to a door panel and an outer periphery of the door frame 2 and/or an opening trim weather strip (not shown) attached to a flange of a door opening portion of the vehicle body.

As shown in Fig. 6, the glass run upper side part 113 of a main body of the glass run 110 has a generally U-shaped cross-section defined with an exterior side wall 120, an interior side wall 130 and a bottom wall 140. An exterior seal lip 121 is provided to extend from around a tip of the exterior side wall 120 towards an interior of the main body having a generally U-shaped cross-section. And an interior seal lip 131 is provided to extend from around a tip of the interior side wall 130 towards the interior of the main body having a generally U-shaped cross-section. In addition, an exterior cover lip 123 is formed to extend from around the tip of the exterior side wall 120 in parallel with an exterior surface of the exterior side wall 120, and an interior cover lip 133 is formed to extend from around the tip of the interior side wall 130 in parallel with an exterior surface of the interior side wall 130.

The exterior side wall 120, the interior side wall 130 and the bottom wall 140 of the main body of the glass run 110 are fitted onto flanges of a door outer panel 2c and a door inner panel 2d of the door frame 2 (see patent literature 1, for example).

At this time, the flange of the door outer panel 2c is inserted between the exterior side wall 120 and the exterior cover lip 123, and the flange of the door inner panel 2d is inserted between the interior side wall 130 and the interior cover lip 133. The bottom wall 140 is held with a flat surface of a door reinforcing panel 2e.

However, as shown in Fig. 4, it is difficult to attach the door reinforcing panel 2e to an entire surface in the upper side of the door frame 2, and the weight of the upper side of the door fame 2 increases so that the door reinforcing panel 2e is merely attached to several parts in the upper side of the door frame 2.

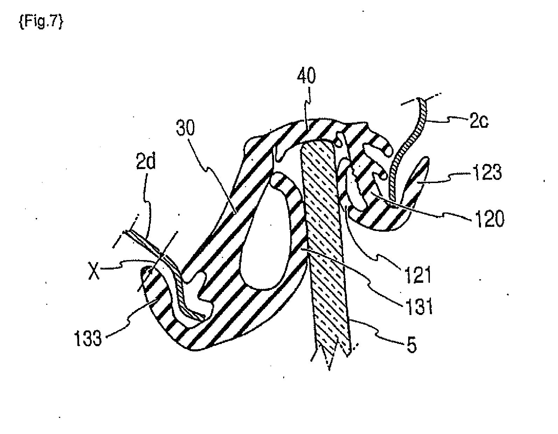

As a result, as shown in Fig. 7, when the door glass 5 is raised, and a tip of the door glass 5 contacts the bottom wall 140 and pushes the bottom wall 140 upwardly, the bottom wall 140 of the glass run 110, which is attached to the upper side 2b of the door frame 2 without providing the door reinforcing panel 2e, is pushed upwardly with the tip of the door glass 5 so that the exterior side wall 120 and the interior side wall 130 are pulled and the exterior cover lip 123 and the interior cover lip 133 separate from the door outer panel 2c and the door inner panel 2d to define a gap (designated as X in Fig. 7), thereby degrading the appearance therearound.

### {Citation List}

### {Patent Literature}

{PTL 1} Japanese unexamined Patent publication 2010-173512 {Summary of Invention}

### {Technical Problem}

Accordingly, it is an object of the present invention to provide a glass run in which no gaps occur between a cover lip and a door panel, even with the raising and lowering of a door glass.

### {Solution to Problem}

According to the present invention as set forth in claim 1, in order to solve the above-described problem, in a glass run for a vehicle, which is adapted to be attached along an inner periphery of a door frame of a vehicle door for guiding a door glass as it is raised and lowered, the glass run has a glass run upper side part formed by extrusion and adapted to be attached to an upper side of the door frame, glass run vertical side parts formed by extrusion and adapted to be attached to vertical sides of the door frame, and corner parts formed by molding to connect the glass run upper side part and the glass run vertical side parts to each other, and adapted to be attached to corners of the door frame.

The glass run upper side part includes a glass run main body having a generally U-shaped cross-section defined with a bottom wall, an exterior side wall extending from an exterior side edge of the bottom wall, and an interior side wall extending from an interior side edge of the bottom wall. An exterior seal lip and an interior seal lip are respectively provided in the exterior side wall and the interior side wall to extend into an interior of the main body having a generally U-shaped cross-section to seal interior and exterior surfaces of the door glass with the exterior seal lip and the interior seal lip, and an exterior cover lip is formed to extend from a tip of the exterior side wall outside the generally U-shaped cross-section, whereas an interior cover lip is formed to extend from a tip of the interior side wall outside the generally U-shaped cross-section.

A flange provided along a tip of an outer panel of the door frame is retained in an exterior retention groove formed between the exterior side wall and the exterior cover lip, whereas a flange provided along a tip of an inner panel of the door frame is retained in an interior retention groove formed between the interior side wall and the interior cover lip.

An engaging protrusion for engaging with a tip of the flange of the door frame is provided in the bottom of at least one of the exterior retention groove and the interior retention groove.

In the present invention as set forth in claim 1, the glass run upper side part includes a glass run main body having a generally U-shaped cross-section defined with a bottom wall, an exterior side wall extending from an exterior side edge of the bottom wall, and an interior side wall extending from an interior side edge of the bottom wall. With this arrangement, when the vehicle door is closed, in the upper side of the door frame, an upper tip of the door glass can be accommodated within the main body of the glass run, which has an exterior side wall, an interior side wall and a bottom wall to define a generally U-shaped cross-section, so that the door glass can be retained securely. In this case, "exterior" and "interior" refer to the exterior side and the interior side of a vehicle compartment of a vehicle in the condition where the vehicle door is closed.

An exterior seal lip and an interior seal lip are respectively provided in the exterior side wall and the interior side wall to extend into an interior of the main body having a generally U-shaped cross-section to seal interior and exterior surfaces of the door glass with the exterior seal lip and the interior seal lip. With this arrangement, when the door glass is raised, the exterior seal lip and the interior seal lip of the glass run upper side part contact the door glass, thereby providing a seal between the door frame and the door glass with the exterior seal lip and the interior seal lip.

An exterior cover lip is formed to extend from a tip of the exterior side wall outside the generally U-shaped cross-section, whereas an interior cover lip is formed to extend from a tip of the interior side wall outside the generally U-shaped cross-section. With this arrangement, the flange of the outer panel of the door frame is covered with the exterior cover lip, whereas the flange of the inner panel of the door frame is covered with the interior cover lip, whereby the flanges can be covered with the cover lips to provide good appearance.

A flange provided along a tip of an outer panel of the door frame is retained by an exterior retention groove formed between the exterior side wall and the exterior cover lip, whereas a flange provided along a tip of an inner panel of the door frame is retained by an interior retention groove formed between the interior side wall and the interior cover lip. With this arrangement, the flange of the door outer panel can be retained by the exterior retention groove, and the flange of the door inner panel can be retained by the interior retention groove, whereby the glass run can be securely attached to the flanges.

An engaging protrusion for engaging with a tip of the flange of the door frame is provided in the bottom of at least one of the exterior retention groove and the interior retention groove so that when the tip of the door glass pushes the bottom wall to pull the exterior side wall and the interior side wall, the engaging protrusion is engaged with the tip of the flange of the door frame to prevent pulling of the cover lip on the side of the engaging protrusion and prevent generating of a gap between the cover lip and the door panel.

According to the present invention as set forth in claim 2, the engaging protrusion is formed into a mountain shape having one slope surface, and a bending part is formed along a tip of the flange of the door frame such that the bending part planarly contacts the slope surface.

In the present invention as set forth in claim 2, the engaging protrusion is formed into a mountain shape having one slope surface, and a bending part is formed along the tip of the flange of the door frame such that the bending part planarly contacts the slope surface. With this arrangement, the bending part provided in the tip of the flange strongly contacts the slope surface with a great contacting area so that the engaging protrusion does not separate from the bending part of the flange. Consequently, the cover lip is prevented from being pulled so that no gap occurs between the cover lip and the door panel.

According to the present invention as set forth in claim 3, a stopping projection is formed on the exterior side wall or the interior side wall in the position slightly nearer to an opening of the exterior retention groove or the interior retention groove in which the engaging protrusion is formed, than a bottom thereof.

In the present invention as set forth in claim 3, a stopping projection is formed on the exterior side wall or the interior side wall in the position slightly nearer to an opening of the exterior retention groove or the interior retention groove in which the engaging protrusion is formed, than a bottom thereof. With this arrangement, if the glass run slips downwards of the flange of the upper side of the door frame, the tip of the flange is engaged with the stopping projection to prevent the grass run from coming off the door frame.

According to the present invention as set forth in claim 4, the engaging protrusion is formed in the interior retention groove provided between the interior side wall and the interior cover lip.

In the present invention as set for the in claim 4, the engaging protrusion is formed in the interior retention groove provided between the interior side wall and the interior cover lip so that the deformation of the interior cover lip having greater dimensions than those of the exterior cover lip is prevented, whereby no gap occurs between the interior cover lip and the inner panel.

According to the present invention as set forth in claim 5, a door reinforcing panel is attached to parts of the upper side of the door frame, and a bottom wall of the glass run upper side part contacts the door reinforcing panel.

In the present invention as set for the in claim 5, the door reinforcing panel is attached to parts of the upper side of the door frame, and the glass run upper side part contacts the door reinforcing panel so that the bottom wall of the glass run is retained with the door reinforcing panel, thereby preventing the bottom wall from being greatly pushed into the door frame due to the raising of the door glass.

### {Advantageous Effects of Invention}

The flange provided along the tip of the outer panel is retained by the exterior retention groove, whereas the flange provided along the tip of the inner panel is retained by the interior retention groove so that the glass run can be securely attached to the flanges.

The engaging protrusion for engaging with the tip of the flange is provided in a bottom of at least one of the exterior retention groove and the interior retention groove so that when the tip of the door glass pushes the bottom wall upwardly, the engaging protrusion is engaged with the tip of the flange to prevent pulling of the cover lip on the side of the engaging protrusion, whereby no gap occurs between the cover lip and the door panel.

### {Brief Description of Drawings}

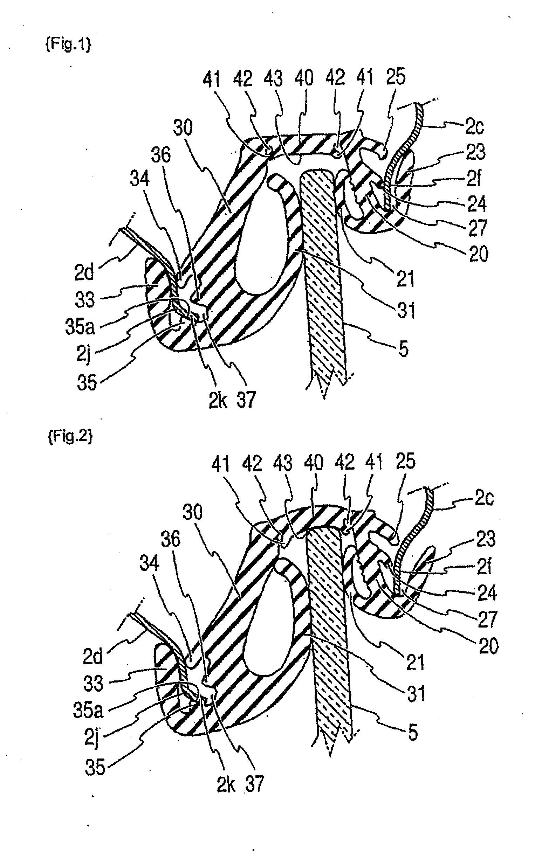

{Fig. 1} is a cross-sectional view showing the condition in which one embodiment of a glass run in accordance with the present invention is attached to an upper side of a door frame, taken along line A-A in Fig. 4.
{Fig. 2} is a cross-sectional view showing the condition in which one embodiment of a glass run in accordance with the present invention is attached to an upper side of a door frame, and a tip of a door glass pushes a bottom wall upwardly, taken along line A-A in Fig. 4.
{Fig. 3} is a cross-sectional view showing the condition in which one embodiment of a glass run in accordance with the present invention along with a door weather strip are attached to an upper side of a door frame for contacting a door opening portion of a vehicle body.
{Fig. 4} is a front view of one embodiment of a glass run in accordance with the present invention.
{Fig. 5} is a front view of a vehicle door.
{Fig. 6} is a cross-sectional view showing the condition in which a conventional glass run is attached to an upper side of a door frame.
{Fig. 7} is a cross-sectional view showing the condition in which a conventional glass run is attached to an upper side of a door frame, and a tip of the door glass pushes a bottom wall thereof upwardly;

### {Description of Embodiments}

One embodiment of the present invention will be explained with reference to Figs. 1 through 5.

Fig. 5 is a front view of a door 1 on a front side of a vehicle, and Fig. 4 is a front view of a glass run 10 of the front door for attachment to a door frame 2 of the door 1. As shown in Fig. 5, the door frame 2 is provided on an upper part of the door 1, and a door glass 5 is attached so as to be raised and lowered. More specifically, the glass run 10 is attached to an inner periphery of the door frame 2 for guiding the door glass 5 as it is raised and lowered, and providing a seal between the door glass 5 and the door frame 2.

As shown in Fig. 4, the glass run 10 includes straight sections 11 formed by extrusion, and corner sections 12 formed by molding, which are attached to corners 2h of the door frame 2 and connect the straight sections 11 to each other.

The straight sections 11 include a glass run upper side part 13 for attachment to an upper side 2b of the door frame 2, a glass run rear vertical side part 15 for attachment to a rear vertical side 2a of the door frame 2, and a glass run front vertical side part 14 for attachment to a division sash defining a front vertical side 2a of the door frame 2.

In order to configure these extruded sections to conform to the configuration of the door frame 2, the corner sections 12 are formed by molding at a front corner and a rear corner to connect the straight sections 11 to each other. The corner sections 12 of the glass run 10 are attached to the corners 2h of the door frame 2.

As shown in Fig. 3, the door 1 is sealed against a door opening portion 6 of a vehicle body with a door weather strip 50 attached to a door panel and an outer periphery of the door frame 2 to contact and seal a door opening portion 6, and the door frame 2 is sealed against the door glass 5 with the glass run 10.

As shown in Fig. 3, in the upper side 2b of the door frame 2 of a press door, the glass run 10 is attached to a door outer panel flange 2f and a door inner panel flange 2j provided along tips of a door outer panel 2c and a door inner panel 2d.

And, as shown in Fig. 4, door reinforcing panels 2e are attached to parts of the upper side 2b of the door frame 2. When the glass run upper side part 13 is attached to the upper side 2b, the bottom wall 40 of the glass run 10, which is attached to the upper side 2b through the door reinforcing panels 2e, is retained with the door reinforcing panels 2e so that when the door glass 5 is raised to push the bottom wall 40, the bottom wall 40 is prevented from being greatly pushed into the door frame 2.

In the part of the upper side 2b of the door frame 2, to which the door reinforcing panel 2e is not attached, the bottom wall 40 is not retained with the door reinforcing panel 2e. In this case, when the door glass 5 is raised and a tip of the door glass 5 pushes the bottom wall 40, an exterior side wall 20 and an interior side wall 30 may be pulled, and consequently, an exterior cover lip 23 and an interior cover lip 33 may separate from the door inner panel 2d and the door inner panel 2d to define a gap.

As shown in FIG. 1, the glass run upper side part 13 of the glass run 10, which is to be attached to the upper side 2b of the door frame 2, is formed to have a generally U-shaped cross-section defined with the bottom wall 40, the exterior side wall 20 extending from an exterior side edge of the bottom wall 40 downwardly (downwardly in Fig. 1) at an approximately right angle or a slightly obtuse angle with respect to the bottom wall 40, and the interior side wall 30 extending from an interior side edge of the bottom wall 40 downwardly at an approximately right angle or a slightly obtuse angle with respect to the bottom wall 40. As described later, the interior side wall 30 is formed greater and thicker, as compared with the exterior side wall 20, and the generally U-shaped cross-section is formed asymmetric such that its interior side is greater than its exterior side.

The main body of the glass run 10, which is defined with the exterior side wall 20, the interior side wall 30 and the bottom wall 40, has substantially an identical cross-sectional shape in both the part for attachment to the upper side 2b of the door frame 2 and the part for attachment to the vertical side 2a thereof.

The terms "exterior" and "interior" in the above description respectively designate an exterior side and an interior side of a vehicle compartment of a vehicle, which is closed with a door, and the terms "up" and "down" in "upwardly", "downwardly", etc. designate up and down directions of a vehicle.

First, the interior side wall 30 will be explained.

The interior side wall 30 is formed thicker and greater, as compared with the exterior side wall 20. Therefore, the glass run 10 can be retained with a side surface of the door frame 2.

The interior cover lip 33 is provided to extend from a tip of the interior side wall 30 outside the approximately U-shaped cross-section. Therefore, the door inner panel flange 2j along a tip of the door inner panel 2d can be covered with the interior cover lip 33 to improve the appearance around the door inner panel flange 2j.

An interior retention groove 37 is provided between the interior side wall 30 and the interior cover lip 33. The door inner panel flange 2j is inserted into the interior retention groove 37 and retained thereby. As shown in Fig. 1, a tip of the door inner panel flange 2j slightly bends toward an exterior of the vehicle to define a bending part 2k.

A base of the interior cover lip 33 slightly extends from the interior side wall 22 toward an interior of the vehicle, and then, the interior cover lip 33 bends upwardly to define an L-shaped cross-section. Therefore, the interior retention groove 37 has a plane space in the bottom thereof. An interior engaging protrusion 35 is formed on a plane part in the bottom of the interior retention groove 37.

The interior engaging protrusion 35 is formed to have a mountain-shaped cross-section, and a surface facing the interior side wall 30 defines an interior engaging protrusion contacting surface 35a for contacting the bending part 2k of the door inner panel flange 2j, which is formed by bending. The interior engaging protrusion contacting surface 35a is formed into a flat inclined surface. And it is preferable to make the bending angle of the bending part 2k of the door inner panel flange 2j and the inclining angle of the interior engaging protrusion contacting surface 35a approximately equal to each other when the door inner panel flange 2j is inserted into the interior retention groove 37.

In this case, as shown in Fig. 2, the bending part 2k of the door inner panel flange 2j planarly contacts the interior engaging protrusion contacting surface 35a. Therefore, the contacting area of the bending part 2k and the interior engaging protrusion contacting surface 35a becomes great so as to press against each other, thereby preventing the door inner panel flange 2j from separating from the interior engaging protrusion 35. As a result, when the interior side wall 30 is pulled due to the pushing of the tip of the door glass 5 against the bottom wall 40, the interior cover lip 33 is prevented from being pulled thereby so that no gap occurs between the interior cover lip 33 and the door inner panel 2d.

The interior engaging protrusion 35 is formed in the interior retention groove 37 provided between the interior side wall 30 and the interior cover lip 33 so that the interior cover lip 33 having greater dimensions than those of the exterior cover lip 23 is prevented from being deformed, and a greater gap is prevented from being formed between the interior cover lip 33 and the door inner panel 2d.

A stopping projection 36 is provided in the interior side wall 30 in the position slightly nearer to an opening of the interior retention groove 37 than the bottom thereof. Where the glass run 10 slips downwardly from the door inner panel flange 2j in the upper side 2b of the door frame 2, the bending part 2k of the door inner panel flange 2j is engaged with the stopping projection 36 to prevent the interior side wall 30 from slipping downwardly, and consequently, prevent the glass run 10 from coming off the door frame 2.

An interior retaining lip 34 is formed on an outer surface of the interior side wall 30, which faces a tip of the interior cover lip 33. The interior retaining lip 34 and the interior cover lip 33 retain a base part of the door inner panel flange 2j. As a result, the interior side wall 30 of the glass run 10 is retained with the door inner panel 2d.

An interior seal lip 31 extends from the tip of the interior side wall 30 obliquely inwardly of the main body of the glass run 10, which has a generally U-shaped cross-section. The interior seal lip 31 is formed to have a length and a thickness greater than those of a later-described exterior seal lip 21 so that when the door glass 5 is inserted into the glass run 10, the door glass 5 can be located on an exterior side of the vehicle body, thereby reducing a level difference between the door frame 2 and the door glass 5. As a result, air resistance and wind noise can be reduced, and aesthetic appearance is preferably improved.

Next, the exterior side wall 20 will be explained.

The exterior side wall 20 of the glass run upper side part 13 is formed to have an approximately plate-shaped cross-section.

The exterior seal lip 21 extends inwardly of the main body having an approximately U-shaped cross-section from around a tip of the exterior side wall 20. The exterior side wall 20 is formed small and thin, as compared with the interior side wall 30.

And the exterior cover lip 23 is provided to extend from the tip of the exterior side wall 20 on an exterior side of the exterior side wall 20 having an approximately U-shaped cross-section, and more specifically, in parallel with the exterior side wall 20 outwardly of the vehicle body.

Therefore, the door outer panel flange 2f in a tip of the door outer panel 2c can be covered with the exterior cover lip 23 to improve the appearance therearound.

An exterior retention groove 27 is formed between the exterior side wall 20 and the exterior cover lip 23. The door outer panel flange 2f is inserted into the exterior retention groove 27 and retained thereby. As shown in Fig. 1, in the present embodiment, a tip of the door outer panel flange 2f does not bend, as is different from the tip of the door inner panel 2j, but may have a bending part, similarly to the door inner panel 2d.

Where the bending part is provided in the tip of the door outer panel flange 2f, an engaging protrusion can be provided in the exterior retention groove 27, similarly to the interior retention groove 37. In this case, the engaging protrusion planarly contacts the bending part of the door outer panel flange 2f, thereby preventing the separation of the door outer panel flange 2f from the engaging protrusion so that when the tip of the door glass 5 pushes the bottom wall 40, the exterior cover lip 23 is prevented from being pulled thereby so that no gap occurs between the exterior cover lip 23 and the door outer panel 2c.

A first exterior retaining lip 24 and a second exterior retaining lip 25 are provided on an exterior surface of the exterior side wall 20. The first exterior retaining lip 24 and the second exterior retaining lip 25 contact the door outer panel flange 2f to ensure the engagement of the exterior side wall 20 with the door outer panel flange 2f, and provide a seal between the exterior side wall 20 and the door outer panel flange 2f.

The exterior seal lip 21 extends on an interior side of the exterior side wall 20 obliquely inwardly of the main body of the glass run 10, which has a generally U-shaped cross-section.

When the door glass 5 is raised, and an upper tip of the door glass 5 is inserted into the glass run upper side part 13 of the main body of the glass run 10, the exterior seal lip 21 and the interior seal lip 31 elastically contact both surfaces of the upper tip of the door glass 5 to provide a seal between the upper tip of the door glass 5 and the door frame 2. In order to reduce the sliding resistance, a low friction sliding member and projection lines can be provided on a surface of the exterior seal lip 21.

The bottom wall 40 is formed to have an approximately plate-shaped configuration, and bottom wall grooves 42 are provided in connecting parts with the interior side wall 30 and the exterior side wall 20 to facilitate the bending of the connecting parts. Bottom wall retaining lips 41, 41 are formed on an interior surface of the bottom wall 40 adjacent to the bottom wall grooves 42. The bottom wall retaining lips 41, 41 respectively contact around bases of the exterior side wall 20 and the interior side wall 30 to prevent the exterior side wall 20 and the interior side wall 30 from tilting inwardly of the main body having an approximately U-shaped cross-section.

In order to form the straight sections 11 of the glass run 10, a synthetic rubber and a thermoplastic elastomer are used as materials thereof. Examples of the synthetic rubber include an EPDM rubber, and examples of the thermoplastic elastomer include a polyolefin elastomer, etc.

Where the synthetic rubber is used, after extruded, it is heated for vulcanizing in a vulcanization chamber with hot wind, high frequency wave, etc. Where the thermoplastic elastomer is used, it is cooled for solidifying. Then, a resultant material is cut to obtain extruded parts, each having a predetermined length.

Next, molded parts of the corner sections 12 of the glass run 10 are formed by cutting the thus obtained extruded parts to predetermined dimensions at generally right angles to the longitudinal direction thereof, placing cut ends of the extruded parts in a mold adapted to mold the molded parts, and injecting a solid material adapted to form the molded parts in a cavity of the mold. The molded parts have a generally identical cross-section to that of each of the extruded parts. It is preferable that the material for the molded parts is of the same kind as the material for the extruded parts. Where the thermoplastic elastomer is used, the material is in a molten state when injected into the mold so that the extruded parts and the molded parts are integrally welded to each other with heat and pressure thereof.

Where the straight sections 11 of the glass run 10 are formed of an EPDM rubber, it is preferable to form the corner sections 12 of the glass run 10 of an EPDM rubber or a thermoplastic olefin elastomer. Where the straight sections 11 of the glass run 10 are formed of a thermoplastic olefin elastomer, the corner sections 12 of the glass run 10 is formed of a thermoplastic olefin elastomer. In this case, they are the materials of the same kind so that the straight sections 11 and the corner sections 12 of the glass run exhibit good adhesion properties. And they are both the olefin-based materials to exhibit good weather resistance, and they can be subjected to simultaneous pulverizing treatment so that readily recyclable manufactured products can be obtained. Where the thermoplastic olefin elastomer is used, no vulcanization treatment is required to facilitate the manufacturing of products.

Where the synthetic rubber is used, it is vulcanized by heating a mold after injecting into the mold. At this time, the extruded parts and the molded parts are composed of an identical material or materials of the same kind so that vulcanization-adhesion thereof can be performed, whereby they can be integrally secured to one another.

### {Reference Signs List}

- 2: door frame
- 2d: door inner panel
- 2j: door inner panel flange
- 10: glass run
- 20: exterior side wall
- 30: interior side wall
- 33: interior cover lip
- 35: interior side wall engaging protrusion
- 37: interior retention groove
- 40: bottom wall

## Claims

1. A glass run for a vehicle, which is adapted to be attached along an inner periphery of a door frame of a vehicle door for guiding a door glass as it is raised and lowered, the glass run including a glass run upper side part formed by extrusion and adapted to be attached to an upper side of the door frame, glass run vertical side parts formed by extrusion and adapted to be attached to vertical sides of the door frame, and corner parts formed by molding to connect the glass run upper side part and the glass run vertical side parts to each other, and adapted to be attached to corners of the door frame, wherein
the glass run upper side part includes a main body having a bottom wall, an exterior side wall extending from an exterior side edge of the bottom wall, and an interior side wall extending from an interior side edge of the bottom wall, which defines a generally U-shaped cross-section, an exterior seal lip and an interior seal lip respectively extend from the exterior side wall and the interior side wall into an interior of the main body having a generally U-shaped cross-section, thereby respectively sealing interior and exterior surfaces of the door glass, an exterior cover lip is formed to extend from a tip of the exterior side wall outside the generally U-shaped cross-section, and an interior cover lip is formed to extend from a tip of the interior side wall outside the generally U-shaped cross-section,
a flange provided along a tip of an outer panel of the door frame is retained by an exterior retention groove formed between the exterior side wall and the exterior cover lip, whereas a flange provided along a tip of an inner panel of the door frame is retained by an interior retention groove formed between the interior side wall and the interior cover lip, and
an engaging protrusion for engaging with the tip of the flange of the door frame is provided in the bottom of at least one of the exterior retention groove and the interior retention groove.

2. The glass run for the vehicle as set forth in claim 1, wherein the engaging protrusion is formed into a mountain shape having one slope surface, and a bending part is formed along a tip of the flange of the door frame such that the bending part planarly contacts the slope surface of the engaging protrusion.

3. The glass run for the vehicle as claimed in one of claim 1 and claim 2 wherein a stopping projection is formed on one of the exterior side wall and the interior side wall in the position slightly nearer to an opening of one of the exterior retention groove and the interior retention groove in which the engaging protrusion is formed, than the bottom thereof.

4. The glass run for the vehicle as claimed in one of claim 1 through claim 3 wherein the engaging protrusion is formed in the interior retention groove formed between the interior side wall and the interior cover lip.

5. The glass run for the vehicle as claimed in one of claim 1 through claim 4 wherein a door reinforcing panel is attached to parts of the upper side of the door frame, and the bottom wall of the glass run upper side part contacts the door reinforcing panel.
